# EUROPÄISCHE PATENTSCHRIFT

(11) **EP 0 305 893 B1**
(45) Veröffentlichungstag und Bekanntmachung des Hinweises auf die Patenterteilung: **19.01.1994**
(21) Anmeldenummer: 88113843.2
(22) Anmeldetag: 25.08.1988
(51) Int. Cl.: H01S 3/03

(54) **Hochleistungs-Bandleiterlaser**
High-power strip-guide laser
Laser de haute puissance à guide d'onde en forme de bande

(30) Priorität: 31.08.1987 DE 3729053
(43) Veröffentlichungstag der Anmeldung: 08.03.1989
(73) Patentinhaber: Deutsche Forschungsanstalt für Luft- und Raumfahrt e.V., 51126 Köln (DE)
(72) Erfinder: Opower, Hans, Dr., D-8033 Krailling (DE)
(74) Vertreter: Hoeger, Stellrecht & Partner

(56) Entgegenhaltungen:
- EP-A- 0 275 023
- WO-A-84/03695
- WO-A-86/07655
- GB-A- 2 060 989
- US-A- 3 386 043
- US-A- 3 772 611
- US-A- 4 559 627
- APPLIED PHYSICS LETTERS, Band 40, Nr. 1, 1. Januar 1982, American Institute of Physics, New York, US; S.LOVOLD und G.WANG: "Ten-atmospheres high repetition rate rf-excited CO2 waveguide laser", Seiten 13-15
- OPTICS COMMUNICATIONS, Band 31, Nr. 2, November 1979; O.L.BOURNE und P.E.DYER: "A novel stable-unstable resonator for beam control of rare-gas halide lasers", Seiten 193-196

## Beschreibung

Die Erfindung betrifft einen elektrisch angeregten Hochleistungslaser mit zwei in geringem Abstand voneinander angeordneten, einen optischen Wellenleiter bildenden Wandflächen, deren Breite ein Vielfaches ihres Abstandes beträgt und mit einem optischen Resonator, dessen Resonatorspiegel an beiden Enden des Wellenleiters angeordnet sind. Ein solcher Laser ist aus Applied Physics Letters, Bd. 40, Nr. 1, 01.01.82, S.13-15 bekannt.

Das Dokument EP-A-0 275 023, das bezüglich der benannten Vertragsstaaten DE, FR, GB und IT Stand der Technik nach Artikel 54(3) EPÜ darstellt, offenbart einen elektrisch angeregten Hochleistungslaser mit zwei in geringem Abstand voneinander angeordneten, einen optischen Wellenleiter bildenden Wandflächen, deren Breite ein Vielfaches ihres Abstandes beträgt und mit einem optischen Resonator, dessen Resonatorspiegel an beiden Enden des Wellenleiters angeordnet sind, wobei die Wandflächen einen strömungsfreien diffusionsgekühlten Entladungsraum zwischen sich einschließen, dessen Breite ein Vielfaches des Abstandes der Wandflächen beträgt, der Resonator ein optisch instabiler Resonator mit einem sich längs einer Resonatorachse erstreckenden und eine zur Resonatorachse transversale Ausdehnung bis zu mindestens einem austretenden Laserstrahl aufweisenden Strahlenverlauf ist und wobei die transversale Ausdehnung quer zu einer Längsrichtung des Wellenleiters und ungefähr parallel zu den Wandflächen verläuft.

Aus der DE-PS 26 08 830 sowie der DE-PS 27 35 299 sind elektrisch angeregte Laser bekannt, bei welchen der Entladungsraum zwischen den Wandflächen eines Wellenleiters eingeschlossen ist. Bei diesen Lasern wird jedoch mit üblichen Resonatoren gearbeitet, welche entweder plan geschliffene oder konkav gekrümmte Spiegel aufweisen, das heißt also optisch stabile Resonatoren sind. Diese Wellenleiterlaser weisen in der Regel eine Vielzahl von optisch nicht zusammenhängenden Laserbereichen auf, welche insbesondere quer zur optischen Achse der Resonatoren entkoppelt sind.

Diese Vielzahl nebeneinander angeordneter Laserbereiche hat den Nachteil, daß sich die aus diesen ausgekoppelten Laserstrahlen nicht vorteilhaft kombinieren lassen, da die Laserbereiche nicht exakt phasengekoppelt arbeiten, so daß die gesamte Laseranordnung nicht, wie es für eine kommerzielle Anwendung, insbesondere für eine gute Fokussierbarkeit, erforderlich ist, in einem einheitlichen Mode schwingt.

Dieser Nachteil tritt insbesondere dann gravierend zutage, wenn ein derartiger diffusionsgekühlter Wellenleiterlaser hohe Leistungen abgeben soll, da man zur Bewältigung der entstehenden Verlustleistung dazu gezwungen ist, den Entladungsraum möglichst großvolumig zu gestalten und damit den Wellenleiter relativ breit auszuführen, da dessen Dicke, um die vorteilhaften optischen und thermischen Eigenschaften des Wellenleiters nicht zu verlieren, nicht vergrös sert werden kann.

Der Erfindung liegt daher die Aufgabe zugrunde, einen Laser der gattungsgemäßen Art derart zu verbessern, daß dieser als Hochleistungslaser mit einem gut fokussierbaren Mode arbeitet.

Diese Aufgabe wird bei einem Laser der eingangs beschriebenen Art erfindungsgemäß dadurch gelöst, daß die Wandflächen einen strömungsfreien diffusionsgekühlten Entladungsraum zwischen sich einschließen, dessen Breite ein Vielfaches des Abstandes der Wandflächen beträgt, daß der Resonator ein optisch instabiler Resonator mit einem sich längs einer Resonatorachse erstreckenden und eine zur Resonatorachse transversale Ausdehnung bis zu mindestens einen austretenden Laserstrahl aufweisenden Strahlenverlauf ist und daß die transversale Ausdehnung quer zu einer Längsrichtung des Wellenleiters und ungefähr parallel zu den Wandflächen verläuft.

Der Vorteil der erfindungsgemäßen Anordnung ist somit darin zu sehen, daß durch die Verbindung eines optischen Wellenleiters mit einem optisch instabilen Resonator die Breite des Wellenleiters keinerlei nachteiligen Einfluß auf die Modenreinheit des Lasers hat, sondern daß durch die ungefähr parallel zur Breite des Wellenleiters in einer einzigen Querrichtung verlaufende transversale Ausdehnung des Strahlenverlaufs der Entladungsraum des Bandleiters über seine gesamte Breite in vorteilhafter Weise zur Laserverstärkung ausgenützt werden kann. Damit ist die Grundlage dafür geschaffen, die vorteilhaften diffusionsgekühlten Wellenlei- . terlaser als Hochleistungslaser mit günstig fokussierbarem Lasermode auszubilden.

Unter der Resonatorachse ist dabei die optische Achse zu verstehen, auf welcher Krümmungsmittelpunkte von Resonatorspiegeln liegen, oder diejenige Achse, auf welcher Resonatorflächen im Schnittpunkt mit derselben senkrecht stehen.

Um eine optimale Ausnutzung des laseraktiven Raums im Wellenleiter zu erreichen, ist es wünschenswert, daß der optisch instabile Resonator so ausgebildet ist, daß von diesem reflektierte Lichtstrahlen den gesamten Entladungsraum im Wellenleiter durchdringen. Eine optimale Modenqualität erhält man jedoch nur dann, wenn die transversale Ausdehnung des Strahlenverlaufs des Resonators maximal der Breite der Wandflächen des Wellenleiters entspricht, d. h. nicht seitlich über den Wellenleiter hinausreicht.

Insbesondere dann, wenn man jedoch einen möglichst kompakten Laser bauen will, ist es von Vorteil,wenn der optisch instabile Resonator einen konkaven Resonatorspiegel aufweist, der eine erste Breitseite des Wellenleiters an dessen erstem Ende vollständig überdeckt. In Ergänzung dazu hat es sich zusätzlich als vorteilhaft erwiesen, wenn der optisch instabile Resonator einen konvexen Resonatorspiegel aufweist, der eine zweite Breitseite des Wellenleiters an dessen zweitem Ende teilweise überdeckt. Mit dieser Dimensionierung der Resonatorspiegel ist eine komptakte Bauweise erreicht, so daß die Resonatorspiegel nicht seitlich über den Wellenleiter überstehen. Es ist aber auch erreicht, daß der Resonator das gesamte laseraktive Volumen im Entladungsraum erfaßt.

Der optisch instabile Resonator gemäß dem vorstehend beschriebenen Ausführungsbeispiel könnte so ausgebildet sein, daß der konvexe Resonatorspiegel mittig der zweiten Breitseite des Wellenleiters angeordnet ist, so daß beiderseits von diesem aus dem Wellenleiter ein Laserstrahl austreten kann. Da es in der Regel erwünscht ist, einen Laser mit nur einem Laserstrahl zu erhalten, ist vorgesehen, daß der konvexe Resonatorspiegel sich bis zu einer Seitenwand des Wellenleiters erstreckt.

Rein prinzipiell wäre es möglich, den Resonator so zu legen, daß die Resonatorachse in einem Winkel zur Längsrichtung des Wellenleiters verläuft. In diesem Falle wäre jedoch wiederum eine optimale Ausnutzung des laseraktiven Volumens im Entladungsraum nicht gegeben. Aus diesem Grund ist es zweckmäßig, wenn eine Resonatorachse parallel zur Längsrichtung des Wellenleiters verläuft.

Besonders zur Erzielung eines parallelen Laserstrahlenbündels hat es sich als nützlich erwiesen, wenn der Resonator ein konfokaler Resonator ist.

Besonders geeignet im Rahmen der erfindungsgemäßen Lösung sind Resonatoren, die einen Strahlverlauf aufweisen, bei welchem die jeweils äußeren Strahlen parallel zueinander verlaufen.

Diese Anpassung an den Wellenleiter ist dann optimal, wenn die jeweils äußeren Strahlen des Resonators längs der beiden äußeren Seitenkanten des Wellenleiters verlaufen, da dann der gesamte durch den Wellenleiter geschaffene Resonatorraum zum einen optimal ausgenützt ist, zum anderen aber auch der Strahlenverlauf des Resonators nicht über den Wellenleiter hinausreicht, wodurch eine Minderung der optischen Qualität und insbesondere auch Streuverluste in dem über den Wellenleiter hinausreichenden Strahlverlauf auftreten können.

Im Rahmen der erfindungsgemäßen Lösung hat sich ein Ausführungsbeispiel als besonders vorteilhaft erwiesen, bei welchem die Resonatorachse längs einer Seitenkante des Wellenleiters verläuft.

Besonders gute Ergebnisse ließen sich dann erzielen, wenn der Resonator sich seitlich der Resonatorachse als Hälfte eines zur Resonatorachse symmetrischen Resonators erstreckt.

Neben der durch die transversale Reflektionsrichtung des optisch instabilen Resonators vorgegebenen konkaven bzw. konvexen Krümmung der Resonatorspiegel in dieser Richtung können die Resonatorspiegel in Richtung senkrecht zu den Wandflächen prinzipiell beliebig ausgebildet sein. So wäre es beispielsweise möglich, daß beide Resonatorspiegel in dieser Richtung eine konkave Krümmung aufweisen, um eine Fokuskussierungswirkung auf die in Richtung des Wellenleiters zurückreflektierten Lichtstrahlen zu erzielen. Im Zusammenhang mit einem Wellenleiter hat sich dies jedoch als ungünstig erwiesen, so daß insbesondere bei einer konstruktiy möglichst einfachen und den gesamten Entladungsraum ausnützenden Ausführungsform vorgesehen ist, daß die Resonatorspiegel senkrecht zu den an diese angrenzenden Wandflächen des Wellenleiters verlaufende Spiegelflächen aufweisen, das heißt also in Richtung senkrecht zu den Wandflächen nicht gekrümmt sind, so daß die Krümmungsebene der Spiegelflächen parallel zu den Wandflächen verläuft.

Ein besonders einfacher und auch mit besonders hoher Präzision kostengünstig herzustellender Resonator zeichnet sich dadurch aus, daß die Resonatorspiegel zylindrische Spiegeloberflächen aufweisen.

Der erfindungsgemäße Wellenleiter ist vorteilhafterweise ein Bandleiter mit quer zur Längsrichtung ebenen Wandflächen, da in diesem Fall die Kombination mit einem optisch instabilen Resonator besonders vorteilhaft realisierbar ist.

Da bei kommerziellen Anwendungen stets die Forderung besteht, die Laser möglichst kompakt zu bauen, hat es sich, um diese Forderung zu erfüllen, als zweckmäßig erwiesen, wenn der Wellenleiter in Längsrichtung gekrümmt ist. Diese Krümmung kann, da die Lichtleitung im Bandleiter im wesentlichen auf Reflexion beruht, so gestaltet werden, daß sie sich nicht nennenswert nachteilig auswirkt, so daß sich besonders durch die Krümmung des Wellenleiters, ohne Einbuße an laseraktivem Volumen, eine kompakte Bauweise erreichen läßt.

Noch komptakter ist jedoch ein Laser herstellbar, wenn der Wellenleiter in Längsrichtung gewinkelt ist, wobei der Wellenleiter bei einer besonders bevorzugten kompakten Version in Längsrichtung mehrfach gewinkelt ist. Zwischen den Abwinklungen des Wellenleiters sind die Wellenleiterstücke jedoch zweckmäßigerweise gerade gerichtet. Um auch bei einem gewinkelten Wellenleiter eine optimale Strahlführung zu gewährleisten, hat es sich als zweckmäßig erwiesen, wenn zwischen den Wellenleiterstücken mit gerade gerichteter Längsrichtung Umlenkprismen vorgesehen sind, welche eine definierte Strahlumlenkung ermöglichen.

Hiermit lassen sich dann Laser bauen, bei welchen die Wellenleiterstücke parallel zueinander liegen, wobei eine zweifache Strahlumlenkung vom einen Wellenleiterstück zum anderen durch zwei aufeinanderfolgende Umlenkelemente erfolgt und zweckmäßigerweise zwischen den aufeinanderfolgenden Umlenkelementen ebenfalls Wellenleiterstücke vorgesehen sind.

Eine Art Sandwichbauweise des erfindungsgemäßen Lasers läßt sich dadurch erreichen, daß die Wellenleiterstücke übereinanderliegend angeordnet sind und vorteilhafterweise identische Dimensionen haben.

Die Anordnung der Resonatorspiegel selbst am Wellenleiter kann grundsätzlich in beliebiger Art und Weise erfolgen.

Besonders vorteilhaft ist es jedoch, wenn die Resonatorspiegel den Wellenleiter abschließen, so daß mit den Resonatorspiegeln ein besonders einfacher gasdichter Abschluß des in dem Entladungsraum enthaltenen Lasergases erreichbar ist. In diesem Fall ist erfindungsgemäß der Wellenleiter neben dem konvexen Resonatorspiegel durch ein ebenfalls den Wellenleiter in diesem Bereich abschließendes Auskoppelfenster verschlossen.

Bei der Herstellung eines vorstehend beschriebenen Ausführungsbeispiels mit den Wellenleiter abschließenden Resonatorspiegeln besteht jedoch das Problem der exakten Orientierung der Resonatorspiegel relativ zur Längsrichtung des Wellenleiters. Aus diesem Grund ist es von Vorteil, wenn die Resonatorspiegel die Wandflächen übergreifend an dem Wellenleiter anliegen und der Bandleiter entsprechend den Spiegelflächen geformt ist, so daß sich bereits bei der Herstellung des Wellenleiters die definierte Orientierung der diesen abschließenden Resonatorspiegel durch entsprechende Gestaltung des Wellenleiters im Bereich seiner Enden erreichen läßt.

Der Wellenleiter selbst kann aus den unterschiedlichsten Materialien hergestellt sein. So ist es zum Beispiel im Rahmen der vorliegenden Erfindung möglich, daß die Wandflächen aus Metall sind. Bei einem anderen Ausführungsbeispiel ist jedoch vorgesehen, daß die Wandflächen aus einem Dielektrikum hergestellt sind und auf ihrer Außenseite flächige metallische Elektroden tragen. Diese Art der Einkopplung bietet sich insbesondere bei Hochfrequenzeinkopplung an, da durch die Wirkung des Dielektrikums eine Stromfadenbildung vermieden wird, wie sie in bestimmten Fällen zwischen zwei metallischen Elektroden auftreten könnte.

Insbesondere dann, wenn eine Entladungsstromdichte in dem Entladungsraum gesteuert werden soll, hat es sich als vorteilhaft erwiesen, wenn die Elektroden segmentiert sind, so daß durch Regelung der in die einzelnen Elektroden eingekoppelten Hochfrequenzleistung auch die Entladungsstromdichte zwischen diesen Elektroden steuerbar ist.

Wenn die Wandflächen aus einem Dielektrikum hergestellt sind, kann es sich jedoch teilweise als schwierig erweisen, diesen die für einen Bandleiter erforderlichen optimalen Reflektionseigenschaften zu verleihen. Aus diesem Grund ist im Rahmen eines zweckmäßigen Ausführungsbeispiels vorgesehen, daß die Wandflächen auf ihrer Innenseite mit einem leitenden Überzug versehen sind.

Dieser leitende Überzug bringt jedoch die Gefahr mit sich, daß möglicherweise eine Stromfadenbildung und damit eine ungleichmäßige Entladung im Lasergas auftritt. Um dies zu vermeiden, kann es daher günstig sein, daß der leitende Überzug segmentiert aufgetragen ist.

Da durch die den Entladungsraum einschließenden Wandflächen die gesamte während der Gasentladung entstehende Wärme abgeführt werden muß, hat es sich im Rahmen der vorliegenden Erfindung als besonders zweckmäßig erwiesen, wenn die Wandflächen aufweisende Wände mit Kühlkanälen durchsetzt sind.

Weitere Merkmale und Vorteile der Erfindung sind Gegenstand der nachfolgenden Beschreibung sowie der zeichnerischen Darstellung einiger Ausführungsbeispiele. In der Zeichnung zeigen:
- Fig. 1: eine teilweise aufgebrochene perspektivische Ansicht eines ersten Ausführungsbeispiels;
- Fig. 2: einen Schnitt längs Linie 2-2 in Fig. 1;
- Fig. 3: einen Schnitt durch ein zweites Ausführungsbeispiel ähnlich einem Schnitt längs Linie 3-3 in Fig. 1;
- Fig. 4: einen Schnitt durch ein drittes Ausführungsbeispiel ähnlich Fig. 3;
- Fig. 5: einen Schnitt durch ein viertes Ausführungsbeispiel ähnlich einem Schnitt längs Linie 5-5 in Fig. 4;
- Fig. 6: einen Längsschnitt durch ein fünftes Ausführungsbeispiel und
- Fig. 7: einen Längsschnitt durch ein sechstes Ausführungsbeispiel.

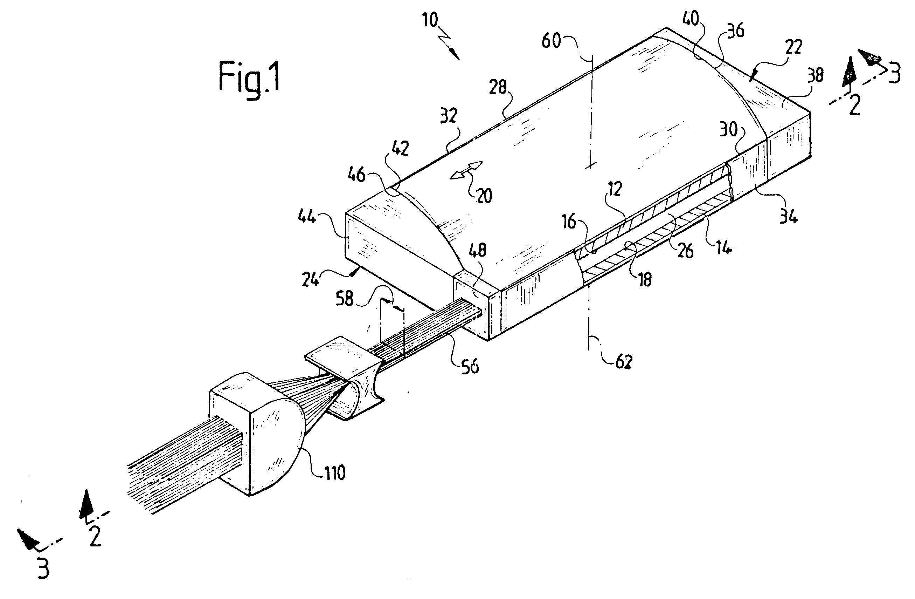

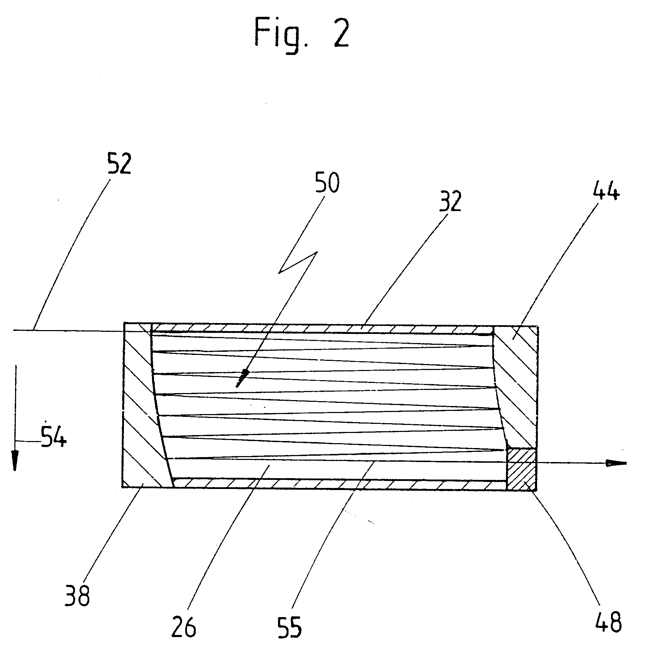

Ein erstes Ausführungsbeispiel eines erfindungsgemäßen Lasers, dargestellt in den Fig. 1 und 2, umfaßt im einzelnen einen als Ganzes mit 10 bezeichneten optischen Bandleiter, welcher aus einer oberen Wand 12 und einer unteren Wand 14 aufgebaut ist, welche mit einander zugewandten Wandflächen 16 bzw. 18 äquidistant zueinander verlaufen und übereinander angeordnet sind. Die beiden identischen Wände 12 und 14 erstrecken sich in Längsrichtung 20 des Bandleiters 10 von einem ersten Ende 22 bis zu einem zweiten Ende 24 derselben, wobei eine Ausdehnung der Wände 12 und 14 quer zur Längsrichtung 20 um ein Vielfaches kleiner ist als deren Ausdehnung in der Längsrichtung 20 und beispielsweise 5 bis 10 cm bei einer Länge des Bandleiters von 30 bis 60 cm beträgt. Der Abstand der Wände 12 und 14 liegt beispielsweise zwischen 1 bis 2 mm und in besonders günstigen Fällen bei 1,5 mm.

Ein zwischen den einander zugewandten Wandflächen 16 und 18 eingeschlossener Entladungsraum des optischen Bandleiters 10 wird in seitlicher Richtung quer zur Längsrichtung 20 begrenzt durch zwei sich entlang voneinander gegenüberliegenden Längsseitenkanten 28 und 30 der Wände 12 bzw. 14 erstreckenden Seitenwänden 32 und 34, welche den Bandleiter über seine gesamte Ausdehnung in der Längsrichtung 20 abdecken. Eine am ersten Ende 22 des Bandleiters 10 gebildete erste Breitseite 36 ist durch einen konkaven Resonatorspiegel 38 abgedeckt, welcher den Bandleiter 10 mit seinen Wänden 12 und 14 in Richtung senkrecht zu den Wandflächen 16 bzw. 18 über seine ganze Höhe übergreift. Um einen dichten Abschluß zwischen dem Bandleiter 10 und dem konkaven Resonatorspiegel zu erreichen, ist dabei die erste Breitseite 36 an eine Spiegeloberfläche 40 des konkaven Resonatorspiegels 38 angepaßt, so daß der Bandleiter 10 sowohl mit seinen Wänden 12 und 14 als auch mit seinen Seitenwänden 32 und 34 bis zur Spiegeloberfläche 40 verläuft und bündig mit dieser abschließt.

Eine am zweiten Ende 24 gebildete zweite Breitseite 42 ist, ausgehend von der Seitenwand 32 durch einen konvexen Resonatorspiegel 44 abgedeckt, jedoch reicht dieser konvexe Resonatorspiegel 44 nicht bis zur Seitenwand 34, sondern läßt zwischen sich und dieser Seitenwand 34 eine Öffnung frei. Insoweit als die Wände 12 und 14 sowie die Seitenwand 32 an den konvexen Resonatorspiegel 44 heranreichen, sind auch diese einer Spiegeloberfläche 46 des konvexen Resonatorspiegels angepaßt, um bündig mit diesem abzuschließen. Zwischen dem konvexen Resonatorspiegel 44 und der Seitenwand 34 ist die zweite Breitseite 42 mittels eines Auskoppelfensters 48 verschlossen, welches sich an den konvexen Resonatorspiegel 44 anschließt sowie die zwischen diesem und der Seitenwand 34 verbleibende Öffnung abschließt und somit gemeinsam mit dem Resonatorspiegel 44 die zweite Breitseite 42 vollständig überdeckt.

Das Auskoppelfenster 48 schließt dabei bündig mit den an dieses heranreichenden Wänden 12 und 14 sowie der Seitenwand 34 ab.

Somit bildet der Bandleiter 10 zusammen mit den Resonatorspiegeln 38 und 44 sowie dem Auskoppelfenster 48 eine den Entladungsraum 26 hermetisch abschließende Einheit.

Bei dem in Fig. 1 und 2 dargestellten Ausführungsbeispiel bilden der konkave Resonatorspiegel 38 und der konvexe Resonatorspiegel 44 einen optisch instabilen Resonator 50 mit einer sich längs der Seitenwand 32 erstreckenden Resonatorachse 52. Von dieser Resonatorachse 52 aus erstreckt sich der optisch instabile Resonator in transversaler Richtung 54 bis zu der Seitenwand 34 und stellt dabei eine Hälfte eines zur Resonatorachse 52 symmetrisch aufgebauten konfokalen Resonators mit zylindrischen Spiegeloberflächen 40, 46 dar, deren Fokus und Krümmungsmittelpunkte auf der Resonatorachse 52 liegen, so daß die Spiegeloberflächen 40, 46 im Bereich ihres Schnittpunktes mit der Resonatorachse senkrecht auf dieser stehen.

Bei diesem optisch instabilen Resonator 50 werden sämtliche in Längsrichtung des Bandleiters 10 sich ausbreitende Lichtwellen so lange zwischen dem konkaven Resonatorspiegel 38 und dem konvexen Resonatorspiegel 44 hin- und herreflektiert, bis sie in der transversalen Richtung 54 quer zur Längsrichtung des Bandleiters zur Seitenwand 34 hin gewandert sind und, wie durch eine Strahlrichtung 55 angedeutet, als Laserstrahl 56 durch das Auskoppelfenster 48 den Bandleiter 10 verlassen. Der Laserstrahl 56 weist dabei einen transversal elektrischen Mode mit parallel zu den Wandflächen 16 bzw. 18 gerichtetem elektrischen Vektor 58 auf.

Ein in dem Entladungsraum 26 befindliches Lasergas, beispielsweise CO oder CO₂, insbesondere CO₂ mit He, N₂ in üblichen Mischungsverhältnissen und vorteilhafterweise einem kleinen Anteil Xe, wird durch eine elektrische Entladung zwischen den Wandflächen 16 und 18 angeregt. Hierzu sind beispielsweise die Wände 12 und 14 aus Metall hergestellt und es erfolgt über die mit den Wandflächen 16 bzw. 18 verbundenen Zuleitungen 60 bzw. 62, beispielsweise eine Einkopplung von Hochfrequenz im Bereich von MHz bis GHz, insbesondere im Bereich von 80-400 MHz, welche dann ihrerseits durch das sich zwischen den Wandflächen 16 und 18 bildende hochfrequente elektrische Wechselfeld in dem unter entsprechendem Unterdruck, beispielsweise 100-200 mbar, im Entladungsraum 26 gehaltenen Lasergas eine elektrische Ladung und damit eine Anregung des Lasergases herbeiführt.

Damit der optische Bandleiter 10 auch als solcher wirken kann, ist es erforderlich, daß die Wandflächen 16 und 18 ihrerseits optisch reflektierend ausgebildet sind, was im Falle von metallischen Wänden 12 und 14 durch einfache Politur derselben erfolgen kann.

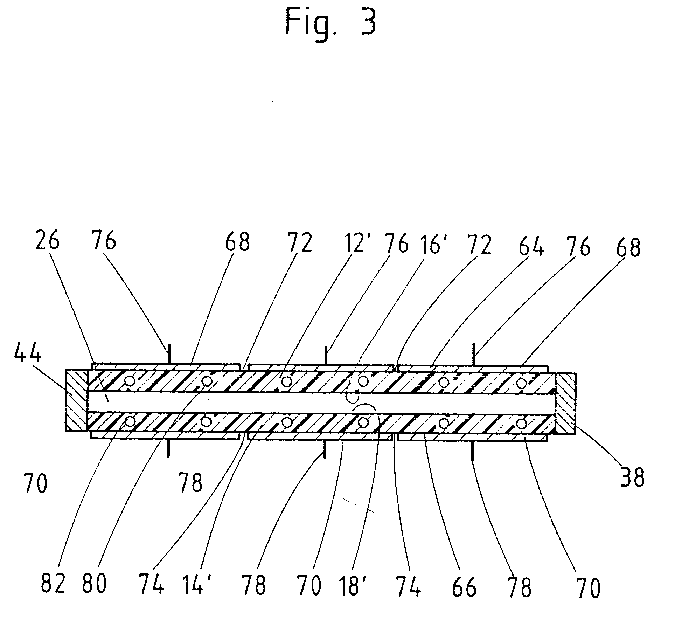

Ein zweites Ausführungsbeispiel des erfindungsgemäßen Lasers ist in Fig. 3 dargestellt. Sofern dieselben Teile wie beim ersten Ausführungsbeispiel Verwendung finden, sind diese mit denselben Bezugszeichen versehen, so daß hinsichtlich ihrer Beschreibung auf die vorstehenden Ausführungen verwiesen werden kann. Sofern die Teile abgewandelt sind, sind diese mit denselben Bezugszeichen, jedoch zusätzlich mit einem Strich versehen.

In Abwandlung zum ersten Ausführungsbeispiel sind die Wände 12′ und 14′ nicht aus Metall, sondern aus dielektrischem Material hergestellt. In diesem Fall müssen dann die Wandflächen 16′ und 18′ als die entstehende Laserstrahlung reflektierende Flächen ausgebildet sein, was entweder durch entsprechende Politur oder durch Aufbringen eines entsprechenden reflektierenden Überzugs möglich ist.

Um eine elektrische Entladung in dem Entladungsraum 26 hervorrufen zu können, sind beim zweiten Ausführungsbeispiel auf Außenseiten 64 und 66 der Wände 12′ bzw. 14′ Metallplatten 68 bzw. 70 aufgebracht, welche nun durch die elektrischen Wände 12′ und 14′ in dem Entladungsraum 26 eine dielektrische Entladung hervorrufen. Diese Anordnung hat den Vorteil, daß durch die dielektrischen Wände 12′ und 14′ eine Stromfadenbildung im Entladungsraum unterbunden werden kann. Vorteilhafterweise sind auf jeder Außenseite 64 bzw. 66 mehrere Metallplatten 68 und 70 vorgesehen, welche sich jeweils quer zur Längsrichtung 20 über die gesamte Breite der jeweiligen Außenseite 64 bzw. 66 erstrecken, jedoch in Längsrichtung 20 der jeweiligen Außenseite 64 bzw. 66 durch Zwischenräume 72 bzw. 74 voneinander getrennt sind. Dadurch entstehen einzelne Segmente, die es ermöglichen, in Abhängigkeit von der Längsrichtung 20 ein definiertes elektrisches Feld im Entladungsraum 26 zu erzeugen und damit insbesondere die Entladung im Entladungsraum 26 homogener zu gestalten. Hierzu ist jede der Metallplatten 68 bzw. 70 mit einem separaten Hochfrequenzanschluß 76 bzw. 78 versehen.

Um insbesondere bei Hochleistungslasern die im Entladungsraum 26 entstehende und durch Diffusion zu den Wänden 12′ bzw. 14′ geleitete Wärme abzuführen, ist beim zweiten Ausführungsbeispiel zusätzlich noch vorgesehen, daß die Wände 12′ und 14′ mit Kühlkanälen 80 bzw. 82 versehen sind, welche im dargestellten Ausführungsbeispiel die Wände 12′ bzw. 14′ quer zur Längsrichtung 20 durchsetzen. Es ist aber auch möglich, daß die Kühlkanäle die Wände 12′ und 14′ in Längsrichtung durchsetzen.

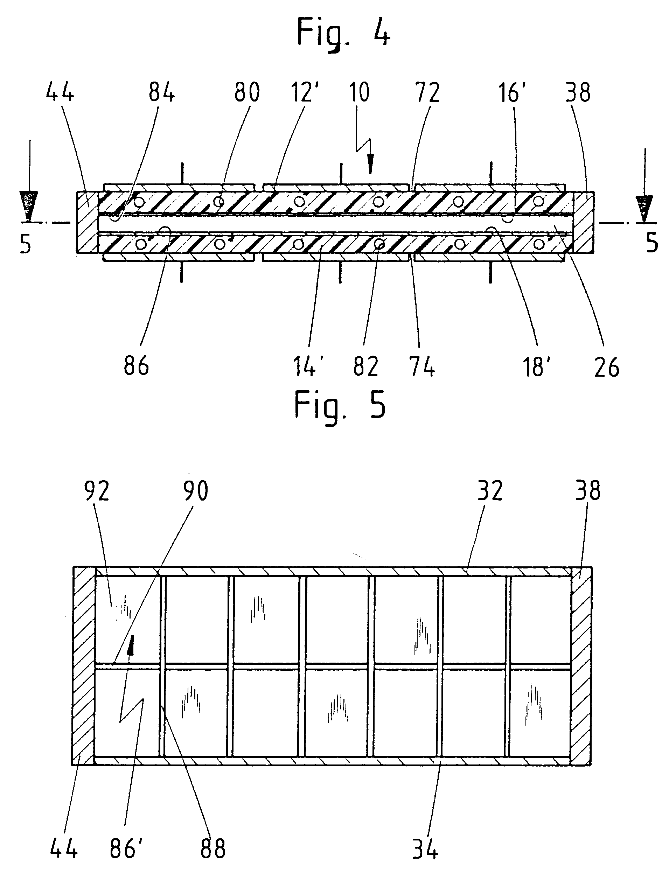

Ein drittes Ausführungsbeispiel, dargestellt in Fig. 4, stellt eine Variante des zweiten Ausführungsbeispiels, dargestellt in Fig. 3, dar. Insoweit als dieselben Teile wie in Fig. 3 Verwendung finden, sind diese auch mit denselben Bezugszeichen versehen. Ergänzend zu dem zweiten Ausführungsbeispiel zeigt das dritte Ausführungsbeispiel zwar dielektrische Wände 12′ und 14′, deren Wandflächen 16′ und 18′ sind jedoch auf der Innenseite zusätzlich mit einem metallischen Überzug 84 bzw. 86 versehen. Dieser metallische Überzug, der in der Regel eine Stärke im µ-Bereich hat, bewirkt aufgrund seiner guten optischen Reflektionseigenschaften eine sehr gute optische Leitfähigkeit des Bandleiters 10. Dieser metallische Überzug 86 kann, wie in Fig. 4 dargestellt, durchgehend angebracht sein. Es ist aber auch möglich, den metallischen Überzug, wie an Hand eines vierten Ausführungsbeispiels in Fig. 5 dargestellt, durch dielektrische Streifen 88 und 90 sowohl in Längsrichtung 20 als auch quer dazu in einzelne Segmente 92 zu unterteilen. Dies kann erforderlich sein, wenn sich in dem Entladungsraum 26 eine Neigung zur Stromfadenbildung zeigt, so daß durch die Segmente 92 eine homogenere Entladung erreichbar ist.

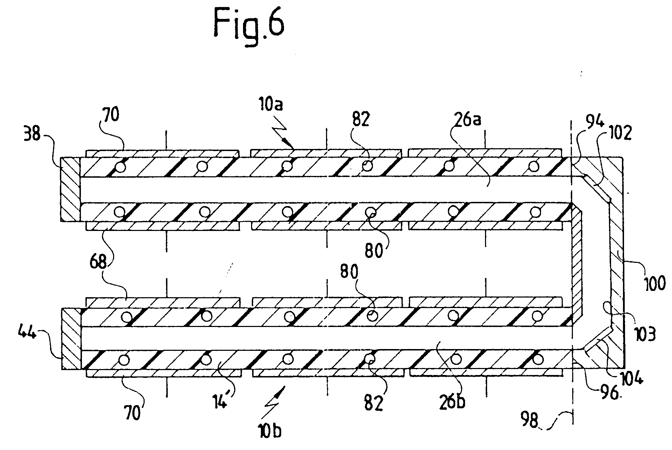

Ein fünftes Ausführungsbeispiel, dargestellt in Fig. 6, basiert auf dem zweiten Ausführungsbeispiel gemäß Fig. 3, allerdings mit dem Unterschied, daß der Bandleiter 10 in zwei übereinanderliegende und parallel zueinander ausgerichtete Bandleiterstücke 10a und 10b unterteilt ist, welche so angeordnet sind, daß ihre Schnittebenen 94 und 96 in einer gemeinsamen Ebene 98 liegen, so daß eine optische Verbindung zwischen den beiden Entladungsräumen 26a und 26b durch ein die beiden Schnittebenen 94 und 96 übergreifendes Verbindungsteil 100 herstellbar ist, das ein dem Entladungsraum 26a zugewandtes Umlenkelement 102 aufweist, welches einen Lichtstrahl in Richtung auf ein dem Entladungsraum 26b zugewandtes Umlenkelement 104 umlenkt, das seinerseits den Lichtstrahl wieder in den Entladungsraum 26 lenkt, so daß sämtliche auf dem Umlenkelement 102 bzw. 104 auftreffenden Lichtstrahlen in den jeweils anderen Entladungsraum 26b bzw. 26a umgelenkt werden. Vorteilhafterweise sind die Umlenkelemente 102 und 104 als Spiegel ausgebildet und in einem Kanal 103 im Verbindungselement 100 angeordnet, welcher die Entladungsräume 26a,b miteinander verbindet.

Gegenüber dem Verbindungsteil 100 sind bei dem fünften Ausführungsbeispiel gemäß Fig. 6 die beiden Laserspiegel 38 und 44 vorgesehen, wobei allerdings bei der Krümmung der Laserspiegel 38 und 44 zur Erzeugung eines konfokalen Resonators der gesamte Lichtweg vom einen Spiegel zum anderen zu berücksichtigen ist.

Diese im fünften Ausführungsbeispiel dargestellte gefaltete Anordnung eines Bandleiters 10 mit zweifach umgebogener optischer Achse hat den Vorteil, daß sie wesentlich kompakter ist und dadurch die Hochfrequenzeinkopplung in die Metallplatten 68 bzw. 70 sowie die Zuleitungen zu den Kühlkanälen 80 und 82 in einfacher Weise angeordnet werden können.

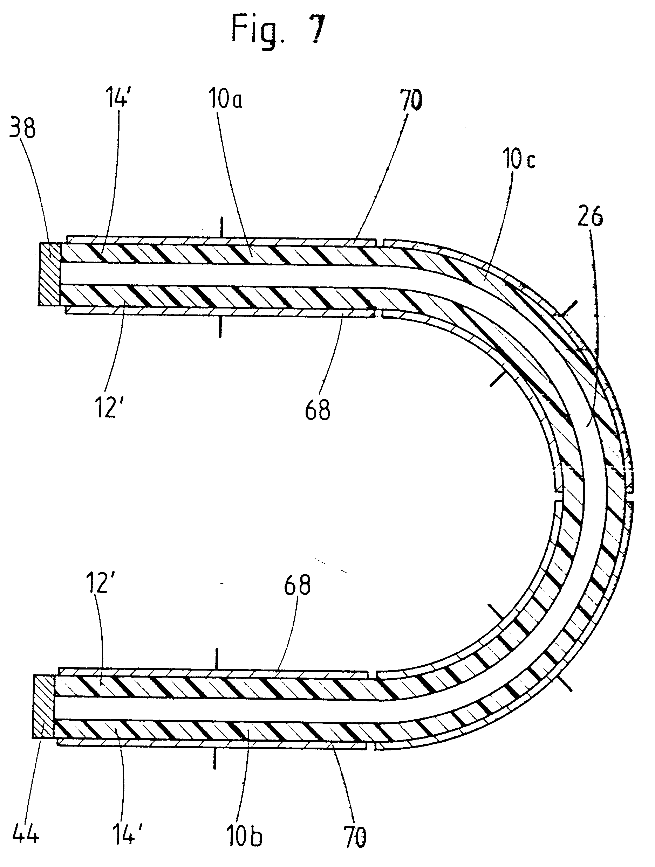

Eine weitere Möglichkeit, den erfindungsgemäßen Laser kompakt zu bauen, ist in Fig. 7 dargestellt. Bei diesem sechsten Ausführungsbeispiel liegen ebenfalls zwei gerade gerichtete Bandleiterstücke 10a und 10b vor. Diese sind jedoch nicht durch ein Verbindungsteil 100 miteinander verbunden, welches eine zweifache Umlenkung der optischen Achse durch Umlenkelemente 102 und 104 bewirkt, sondern durch ein gebogenes Bandleiterstück 10c, welches sich an das Bandleiterstück 10b anschließt.

Dadurch daß die Lichtleitung in einem optischen Bandleiter im wesentlichen durch Reflexionen an den Wandflächen 16 und 18 erfolgt, besteht auch die Möglichkeit, ein gekrümmtes Bandleiterstück 10c herzustellen, welches eine optische Lichtleitung in derselben Weise wie die gerade gerichteten Bandleiterstücke 10a und 10b ermöglicht. Zusätzlich besteht in dem gekrümmten Bandleiterstück ebenfalls noch die Möglichkeit, eine Gasentladung zu erzeugen und somit auch in dem Entladungsraum 26c des gekrümmten Bandleiterstücks durch das darin enthaltene laseraktive Volumen eine optische Verstärkung zu erreichen, so daß dieses sechste Ausführungsbeispiel zwar weniger kompakt als das fünfte Ausführungsbeispiel ist, jedoch längs des gesamten optischen Weges innerhalb des Bandleiters 10 ein laseraktives Medium und damit eine Verstärkung ermöglicht. Ansonsten ist dieses sechste Ausführungsbeispiel mit dem zweiten Ausführungsbeispiel in Fig. 3 vergleichbar, mit dem einzigen Unterschied, daß in dem gekrümmten Bandleiterstück 10c zwangsläufig auch die Wände 12′ und 14′ sowie die Elektroden 68 und 70 gekrümmt sein müssen.

Bei allen Ausführungsbeispielen mit dielektrischen Wänden 12′ und 14′ sind diese vorzugsweise aus einem Keramikmaterial, insbesondere Al₂, BeO oder AlO, hergestellt.

Der mit einem derartigen Laser erzeugte Laserstrahl 56 hat einen rechteckförmigen Querschnitt, er läßt sich jedoch wie in Fig. 1 dargestellt, mit einer Zylinderoptik 110 zu einem allseits symmetrischen Laserstrahl aufweiten, welcher dann seinerseits gut fokussierbar ist.

## Patentansprüche (Patentansprüche für folgende(n) Vertragsstaat(en): DE, FR, GB, IT)

1. Elektrisch angeregter Hochleistungslaser mit zwei in geringem Abstand voneinander angeordneten, einen optischen Wellenleiter bildenden Wandflächen, deren Breite ein Vielfaches ihres Abstandes beträgt und mit einem optischen Resonator, dessen Resonatorspiegel an beiden Enden des Wellenleiters angeordnet sind,
**dadurch gekennzeichnet,**
daß die Wandflächen (16,18) einen strömungsfreien diffusionsgekühlten Entladungsraum zwischen sich einschließen, dessen Breite ein Vielfaches des Abstandes der Wandflächen (16,18) beträgt, daß der Resonator ein optisch instabiler Resonator (50) mit einem sich längs einer Resonatorachse (52) erstreckenden und eine zur Resonatorachse (52) transversale Ausdehnung (54) bis zu mindestens einem austretenden Laserstrahl (55,56) aufweisenden Strahlenverlauf ist, daß die transversale Ausdehnung (54) quer zu einer Längsrichtung (20) des Wellenleiters (10) und ungefähr parallel zu den Wandflächen (16,18) verläuft und daß die transversale Ausdehnung (54) des Strahlenverlaufs des Resonators (50) maximal der Breite der Wandflächen (16,18) des Wellenleiters (10) entspricht.

2. Elektrisch angeregter Hochleistungslaser mit zwei in geringem Abstand voneinander angeordneten, einen optischen Wellenleiter bildenden Wandflächen, deren Breite ein Vielfaches ihres Abstandes beträgt und mit einem optischen Resonator, dessen Resonatorspiegel an beiden Enden des Wellenleiters angeordnet sind, dadurch gekennzeichnet, daß die Wandflächen (16,18) einen strömungsfreien diffusionsgekühlten Entladungsraum zwischen sich einschließen, dessen Breite ein Vielfaches des Abstandes der Wandflächen (16,18) beträgt, daß der Resonator ein optisch instabiler Resonator (50) mit einem sich längs einer Resonatorachse (52) erstreckenden und eine zur Resonatorachse (52) transversale Ausdehnung (54) bis zu mindestens einem austretenden Laserstrahl (55,56) aufweisenden Strahlenverlauf ist, daß die transversale Ausdehnung (54) quer zu einer Längsrichtung (20) des Wellenleiters (10) und ungefähr parallel zu den Wandflächen (16,18) verläuft und daß ein aus dem Resonator (50) ausgekoppelter Laserstrahl mit einer zylindrischen Optik zu einem allseits symmetrischen Strahlenbündel aufgeweitet ist.

3. Hochleistungslaser nach Anspruch 1 oder 2, dadurch gekennzeichnet, daß der optisch instabile Resonator (50) einen konkaven Resonatorspiegel (38) aufweist, der eine erste Breitseite (36) des Wellenleiters (10) an dessen erstem Ende (22) vollständig überdeckt.

4. Hochleistungslaser nach einem der Ansprüche 1 bis 3, dadurch gekennzeichnet, daß der optisch instabile Resonator (50) einen konvexen Resonatorspiegel (44) aufweist, der eine zweite Breitseite (42) des Wellenleiters (10) an dessen zweitem Ende (24) teilweise überdeckt.

5. Hochleistungslaser nach Anspruch 4, dadurch gekennzeichnet, daß der konvexe Resonatorspiegel (44) sich bis zu einer Seitenwand (32) des Wellenleiters (10) erstreckt.

6. Hochleistungslaser nach einem der voranstehenden Ansprüche, dadurch gekennzeichnet, daß die Resonatorachse (52) parallel zu einer Längsrichtung (20) des Wellenleiters (10) verläuft.

7. Hochleistungslaser nach einem der voranstehenden Ansprüche, dadurch gekennzeichnet, daß der Resonator (50) ein konfokaler Resonator ist.

8. Hochleistungslaser nach einem der voranstehenden Ansprüche, dadurch gekennzeichnet, daß der Resonator (50) einen Strahlenverlauf aufweist, bei welchem die jeweils äußeren Strahlen parallel zueinander verlaufen.

9. Hochleistungslaser nach Anspruch 8, dadurch gekennzeichnet, daß die jeweils äußeren Strahlen des Resonators (50) längs der beiden äußeren Seitenkanten (28, 30) des Wellenleiters (10) verlaufen.

10. Hochleistungslaser nach einem der Ansprüche 6 bis 9, dadurch gekennzeichnet, daß die Resonatorachse (52) längs einer Seitenkante (28) des Wellenleiters (10) verläuft.

11. Hochleistungslaser nach einem der Ansprüche 6 bis 10, dadurch gekennzeichnet, daß der Resonator (50) sich seitlich der Resonatorachse (52) als Hälfte eines zur Resonatorachse (52) symmetrischen Resonators erstreckt.

12. Hochleistungslaser nach einem der voranstehenden Ansprüche, dadurch gekennzeichnet, daß die Resonatorspiegel (38, 44) senkrecht zu den an diese angrenzenden Wandflächen (16, 18) des Wellenleiters (10) verlaufende Spiegeloberflächen (40, 46) aufweisen.

13. Hochleistungslaser nach Anspruch 12, dadurch gekennzeichnet, daß die Resonatorspiegel (38, 44) zylindrische Spiegeloberflächen (40, 46) aufweisen.

14. Hochleistungslaser nach einem der voranstehenden Ansprüche, dadurch gekennzeichnet, daß der Wellenleiter ein Bandleiter mit quer zur Längsrichtung ebenen Wandflächen (16, 18) ist.

15. Hochleistungslaser nach einem der voranstehenden Ansprüche, dadurch gekennzeichnet, daß der Wellenleiter (10) in Längsrichtung gekrümmt ist.

16. Hochleistungslaser nach einem der voranstehenden Ansprüche, dadurch gekennzeichnet, daß der Wellenleiter (10) in Längsrichtung (20) gewinkelt ist.

17. Hochleistungslaser nach Anspruch 16, dadurch gekennzeichnet, daß der Wellenleiter (10) in Längsrichtung (20) mehrfach gewinkelt ist.

18. Hochleistungslaser nach einem der Ansprüche 16 oder 17, dadurch gekennzeichnet, daß zwischen Wellenleiterstücken (10a, 10b) mit gerade gerichteter Längsrichtung mindestens ein Umlenkelement (102, 104) vorgesehen ist.

19. Hochleistungslaser nach Anspruch 17 oder 18, dadurch gekennzeichnet, daß die Wellenleiterstücke (10a, 10b) parallel zueinander liegen.

20. Hochleistungslaser nach einem der Ansprüche 17 bis 19, dadurch gekennzeichnet, daß die Wellenleiterstücke (10a, 10b) übereinanderliegend angeordnet sind.

21. Hochleistungslaser nach einem der voranstehenden Ansprüche, dadurch gekennzeichnet, daß die Resonatorspiegel (38, 44) den Wellenleiter (10) abschließen.

22. Hochleistungslaser nach Anspruch 21, dadurch gekennzeichnet, daß die Resonatorspiegel (38, 44) die Wandflächen (16, 18) übergreifend an dem Wellenleiter (10) anliegen und der Wellenleiter (10) entsprechend den Spiegeloberflächen (40, 46) geformt ist.

23. Hochleistungslaser nach einem der voranstehenden Ansprüche, dadurch gekennzeichnet, daß die Wandflächen (16, 18) aus Metall sind.

24. Hochleistungslaser nach einem der Ansprüche 1 bis 22, dadurch gekennzeichnet, daß die Wandflächen (16, 18) aus einem Dielektrikum hergestellt sind und auf ihrer Außenseite (64, 66) flächige Elektroden (68, 70) tragen.

25. Hochleistungslaser nach Anspruch 24, dadurch gekennzeichnet, daß die Elektroden (68,70) durch Zwischenräume (72,74) segmentiert sind.

26. Hochleistungslaser nach Anspruch 24 oder 25, dadurch gekennzeichnet, daß die Wandflächen (16,18) mit einem leitenden Überzug (84,86) versehen sind.

27. Hochleistungslaser nach Anspruch 26, dadurch gekennzeichnet, daß der leitende Überzug (84,86) segmentiert aufgetragen ist.

28. Hochleistungslaser nach einem der voranstehenden Ansprüche, dadurch gekennzeichnet, daß die Wandflächen aufweisende Wände (12,14) mit Kühlkanälen (80,82) durchsetzt sind.

29. Hochleistungslaser nach einem der Ansprüche 1 und 3 bis 28, dadurch gekennzeichnet, daß ein aus dem Resonator (50) ausgekoppelter Laserstrahl mit einer zylindrischen Optik zu einem allseits symmetrischen Strahlenbündel aufgeweitet ist.

## Patentansprüche (Patentansprüche für folgende(n) Vertragsstaat(en): ES)

1. Elektrisch angeregter Hochleistungslaser mit zwei in geringem Abstand voneinander angeordneten, einen optischen Wellenleiter bildenden Wandflächen, deren Breite ein Vielfaches ihres Abstandes beträgt und mit einem optischen Resonator, dessen Resonatorspiegel an beiden Enden des Wellenleiters angeordnet sind,
**dadurch gekennzeichnet,**
daß die Wandflächen (16,18) einen strömungsfreien diffusionsgekühlten Entladungsraum zwischen sich einschließen, dessen Breite ein Vielfaches des Abstandes der Wandflächen (16,18) beträgt, daß der Resonator ein optisch instabiler Resonator (50) mit einem sich längs einer Resonatorachse (52) erstreckenden und eine zur Resonatorachse (52) transversale Ausdehnung (54) bis zu mindestens einem austretenden Laserstrahl (55,56) aufweisenden Strahlenverlauf ist und daß die transversale Ausdehnung (54) quer zu einer Längsrichtung (20) des Wellenleiters (10) und ungefähr parallel zu den Wandflächen (16,18) verläuft.

2. Hochleistungslaser nach Anspruch 1, dadurch gekennzeichnet, daß die transversale Ausdehnung (54) des Strahlenverlaufs des Resonators (50) maximal der Breite der Wandflächen (16,18) des Wellenleiters (10) entspricht.

3. Hochleistungslaser nach Anspruch 1 oder 2, dadurch gekennzeichnet, daß der optisch instabile Resonator (50) einen konkaven Resonatorspiegel (38) aufweist, der eine erste Breitseite (36) des Wellenleiters (10) an dessen erstem Ende (22) vollständig überdeckt.

4. Hochleistungslaser nach einem der Ansprüche 1 bis 3, dadurch gekennzeichnet, daß der optisch instabile Resonator (50) einen konvexen Resonatorspiegel (44) aufweist, der eine zweite Breitseite (42) des Wellenleiters (10) an dessen zweitem Ende (24) teilweise überdeckt.

5. Hochleistungslaser nach Anspruch 4, dadurch gekennzeichnet, daß der konvexe Resonatorspiegel (44) sich bis zu einer Seitenwand (32) des Wellenleiters (10) erstreckt.

6. Hochleistungslaser nach einem der voranstehenden Ansprüche, dadurch gekennzeichnet, daß die Resonatorachse (52) parallel zu einer Längsrichtung (20) des Wellenleiters (10) verläuft.

7. Hochleistungslaser nach einem der voranstehenden Ansprüche, dadurch gekennzeichnet, daß der Resonator (50) ein konfokaler Resonator ist.

8. Hochleistungslaser nach einem der voranstehenden Ansprüche, dadurch gekennzeichnet, daß der Resonator (50) einen Strahlenverlauf aufweist, bei welchem die jeweils äußeren Strahlen parallel zueinander verlaufen.

9. Hochleistungslaser nach Anspruch 8, dadurch gekennzeichnet, daß die jeweils äußeren Strahlen des Resonators (50) längs der beiden äußeren Seitenkanten (28, 30) des Wellenleiters (10) verlaufen.

10. Hochleistungslaser nach einem der Ansprüche 6 bis 9, dadurch gekennzeichnet, daß die Resonatorachse (52) längs einer Seitenkante (28) des Wellenleiters (10) verläuft.

11. Hochleistungslaser nach einem der Ansprüche 6 bis 10, dadurch gekennzeichnet, daß der Resonator (50) sich seitlich der Resonatorachse (52) als Hälfte eines zur Resonatorachse (52) symmetrischen Resonators erstreckt.

12. Hochleistungslaser nach einem der voranstehenden Ansprüche, dadurch gekennzeichnet, daß die Resonatorspiegel (38, 44) senkrecht zu den an diese angrenzenden Wandflächen (16, 18) des Wellenleiters (10) verlaufende Spiegeloberflächen (40, 46) aufweisen.

13. Hochleistungslaser nach Anspruch 12, dadurch gekennzeichnet, daß die Resonatorspiegel (38, 44) zylindrische Spiegeloberflächen (40, 46) aufweisen.

14. Hochleistungslaser nach einem der voranstehenden Ansprüche, dadurch gekennzeichnet, daß der Wellenleiter ein Bandleiter mit quer zur Längsrichtung ebenen Wandflächen (16, 18) ist.

15. Hochleistungslaser nach einem der voranstehenden Ansprüche, dadurch gekennzeichnet, daß der Wellenleiter (10) in Längsrichtung gekrümmt ist.

16. Hochleistungslaser nach einem der voranstehenden Ansprüche, dadurch gekennzeichnet, daß der Wellenleiter (10) in Längsrichtung (20) gewinkelt ist.

17. Hochleistungslaser nach Anspruch 16, dadurch gekennzeichnet, daß der Wellenleiter (10) in Längsrichtung (20) mehrfach gewinkelt ist.

18. Hochleistungslaser nach einem der Ansprüche 16 oder 17, dadurch gekennzeichnet, daß zwischen Wellenleiterstücken (10a, 10b) mit gerade gerichteter Längsrichtung mindestens ein Umlenkelement (102, 104) vorgesehen ist.

19. Hochleistungslaser nach Anspruch 17 oder 18, dadurch gekennzeichnet, daß die Wellenleiterstücke (10a, 10b) parallel zueinander liegen.

20. Hochleistungslaser nach einem der Ansprüche 17 bis 19, dadurch gekennzeichnet, daß die Wellenleiterstücke (10a, 10b) übereinanderliegend angeordnet sind.

21. Hochleistungslaser nach einem der voranstehenden Ansprüche, dadurch gekennzeichnet, daß die Resonatorspiegel (38, 44) den Wellenleiter (10) abschließen.

22. Hochleistungslaser nach Anspruch 21, dadurch gekennzeichnet, daß die Resonatorspiegel (38, 44) die Wandflächen (16, 18) übergreifend an dem Wellenleiter (10) anliegen und der Wellenleiter (10) entsprechend den Spiegeloberflächen (40, 46) geformt ist.

23. Hochleistungslaser nach einem der voranstehenden Ansprüche, dadurch gekennzeichnet, daß die Wandflächen (16, 18) aus Metall sind.

24. Hochleistungslaser nach einem der Ansprüche 1 bis 22, dadurch gekennzeichnet, daß die Wandflächen (16, 18) aus einem Dielektrikum hergestellt sind und auf ihrer Außenseite (64, 66) flächige Elektroden (68, 70) tragen.

25. Hochleistungslaser nach Anspruch 24, dadurch gekennzeichnet, daß die Elektroden (68, 70) durch Zwischenräume (72, 74) segmentiert sind.

26. Hochleistungslaser nach Anspruch 24 oder 25, dadurch gekennzeichnet, daß die Wandflächen (16, 18) mit einem leitenden Überzug (84, 86) versehen sind.

27. Hochleistungslaser nach Anspruch 26, dadurch gekennzeichnet, daß der leitende Überzug (84, 86) segmentiert aufgetragen ist.

28. Hochleistungslaser nach einem der voranstehenden Ansprüche, dadurch gekennzeichnet, daß die Wandflächen aufweisende Wände (12, 14) mit Kühlkanälen (80, 82) durchsetzt sind.

29. Hochleistungslaser nach einem der voranstehenden Ansprüche, dadurch gekennzeichnet, daß ein aus dem Resonator (50) ausgekoppelter Laserstrahl mit einer zylindrischen Optik zu einem allseits symmetrischen Strahlenbündel aufgeweitet ist.

## Claims (Claims for the following Contracting State(s): DE, FR, GB, IT)

1. Electrically excited high-power laser comprising two wall surfaces arranged at a slight distance from one another and forming an optical wave guide, the width of said wall surfaces being a multiple of the distance between them, and an optical resonator having resonator mirrors arranged at both ends of the wave guide, characterized in that the wall surfaces (16, 18) enclose between them a flow-free, diffusion-cooled discharge chamber, the width of said discharge chamber being a multiple of the distance between the wall surfaces (16, 18), that the resonator is an optically unstable resonator (50) having a beam path extending lengthwise of a resonator axis (52) and having an expansion (54) transverse to the resonator axis (52) extending as far as at least one exiting laser beam (55, 56), that the transverse expansion (54) extends transversely to a longitudinal direction (20) of the wave guide (10) and approximately parallel to the wall surfaces (16, 18) and that the transverse expansion (54) of the beam path of the resonator (50) corresponds at the most to the width of the wall surfaces (16, 18) of the wave guide (10).

2. Electrically excited high-power laser comprising two wall surfaces arranged at a slight distance from one another and forming an optical wave guide, the width of said wall surfaces being a multiple of the distance between them, and an optical resonator having resonator mirrors arranged at both ends of the wave guide, characterized in that the wall surfaces (16, 18) enclose between them a flow-free, diffusion-cooled discharge chamber, the width of said discharge chamber being a multiple of the distance between the wall surfaces (16, 18), that the resonator is an optically unstable resonator (50) having a beam path extending lengthwise of a resonator axis (52) and having an expansion (54) transverse to the resonator axis (52) extending as far as at least one exiting laser beam (55, 56), that the transverse expansion (54) extends transversely to a longitudinal direction (20) of the wave guide (10) and approximately parallel to the wall surfaces (16, 18) and that a laser beam coupled out of the resonator (50) is expanded with a cylindrical optical means to form a bundle of rays symmetrical on all sides.

3. High-power laser as defined in claim 1 or 2, characterized in that the optically unstable resonator (50) has a concave resonator mirror (38) completely covering a first broadside (36) of the wave guide (10) at its first end (22).

4. High-power laser as defined in any of claims 1 to 3, characterized in that the optically unstable resonator (50) has a convex resonator mirror (44) partially covering a second broadside (42) of the wave guide (10) at its second end (24).

5. High-power laser as defined in claim 4, characterized in that the convex resonator mirror (44) extends as far as a side wall (32) of the wave guide (10).

6. High-power laser as defined in any of the preceding claims, characterized in that the resonator axis (52) extends parallel to a longitudinal direction (20) of the wave guide (10).

7. High-power laser as defined in any of the preceding claims, characterized in that the resonator (50) is a confocal resonator.

8. High-power laser as defined in any of the preceding claims, characterized in that the resonator (50) has a beam path wherein the respective outer rays extend parallel to one another.

9. High-power laser as defined in claim 8, characterized in that the respective outer rays of the resonator (50) extend along the two outer side edges (28, 30) of the wave guide (10).

10. High-power laser as defined in any of claims 6 to 9, characterized in that the resonator axis (52) extends along one side edge (28) of the wave guide (10).

11. High-power laser as defined in any of claims 6 to 10, characterized in that the resonator (50) extends laterally of the resonator axis (52) as half of a resonator symmetrical to the resonator axis (52).

12. High-power laser as defined in any of the preceding claims, characterized in that the resonator mirrors (38, 44) have mirror surfaces (40, 46) extending at right angles to the wall surfaces (16, 18) of the wave guide (10) contiguous thereto.

13. High-power laser as defined in claim 12, characterized in that the resonator mirrors (38, 44) have cylindrical mirror surfaces (40, 46).

14. High-power laser as defined in any of the preceding claims, characterized in that the wave guide is a strip-type guide having plane wall surfaces (16, 18) extending transversely to the longitudinal direction.

15. High-power laser as defined in any of the preceding claims, characterized in that the wave guide (10) is curved in longitudinal direction.

16. High-power laser as defined in any of the preceding claims, characterized in that the wave guide (10) is angled in longitudinal direction (20).

17. High-power laser as defined in claim 16, characterized in that the wave guide (10) is angled several times in longitudinal direction (20).

18. High-power laser as defined in either of claims 16 or 17, characterized in that at least one deflecting element (102, 104) is provided between wave guide portions (10a, 10b) extending in a straight line in longitudinal direction.

19. High-power laser as defined in claim 17 or 18, characterized in that the wave guide portions (10a, 10b) are disposed parallel to one another.

20. High-power laser as defined in any of claims 17 to 19, characterized in that the wave guide portions (10a, 10b) are arranged one above the other.

21. High-power laser as defined in any of the preceding claims, characterized in that the resonator mirrors (38, 44) close the wave guide (10).

22. High-power laser as defined in claim 21, characterized in that the resonator mirrors (38, 44) rest on the wave guide (10) so as to overlap the wall surfaces (16, 18) and the wave guide (10) is shaped in accordance with the mirror surfaces (40, 46).

23. High-power laser as defined in any of the preceding claims, characterized in that the wall surfaces (16, 18) are made of metal.

24. High-power laser as defined in any of claims 1 to 22, characterized in that the wall surfaces (16, 18) are produced from a dielectric and bear plate-like electrodes (68, 70) on their outer side (64, 66).

25. High-power laser as defined in claim 24, characterized in that the electrodes (68, 70) are segmented by intermediate spaces (72, 74).

26. High-power laser as defined in claim 24 or 25, characterized in that the wall surfaces (16, 18) are provided with a conductive coating (84, 86).

27. High-power laser as defined in claim 26, characterized in that the conductive coating (84, 86) is applied in segments.

28. High-power laser as defined in any of the preceding claims, characterized in that the walls (12, 14) having the wall surfaces are penetrated by cooling channels (80, 82).

29. High-power laser as defined in any of claims 1 and 3 to 28, characterized in that a laser beam coupled out of the resonator (50) is expanded by a cylindrical optical means to form a bundle of rays symmetrical on all sides.

## Claims (Claims for the following Contracting State(s): ES)

1. Electrically excited high-power laser comprising two wall surfaces arranged at a slight distance from one another and forming an optical wave guide, the width of said wall surfaces being a multiple of the distance between them, and an optical resonator having resonator mirrors arranged at both ends of the wave guide, characterized in that the wall surfaces (16, 18) enclose between them a flow-free, diffusion-cooled discharge chamber, the width of said discharge chamber being a multiple of the distance between the wall surfaces (16, 18), that the resonator is an optically unstable resonator (50) having a beam path extending lengthwise of a resonator axis (52) and having an expansion (54) transverse to the resonator axis (52) extending as far as at least one exiting laser beam (55, 56) and that the transverse expansion (54) extends transversely to a longitudinal direction (20) of the wave guide (10) and approximately parallel to the wall surfaces (16, 18).

2. High-power laser as defined in claim 1, characterized in that the transverse expansion (54) of the beam path of the resonator (50) corresponds at the most to the width of the wall surfaces (16, 18) of the wave guide (10).

3. High-power laser as defined in claim 1 or 2, characterized in that the optically unstable resonator (50) has a concave resonator mirror (38) completely covering a first broadside (36) of the wave guide (10) at its first end (22).

4. High-power laser as defined in any of claims 1 to 3, characterized in that the optically unstable resonator (50) has a convex resonator mirror (44) partially covering a second broadside (42) of the wave guide (10) at its second end (24).

5. High-power laser as defined in claim 4, characterized in that the convex resonator mirror (44) extends as far as a side wall (32) of the wave guide (10).

6. High-power laser as defined in any of the preceding claims, characterized in that the resonator axis (52) extends parallel to a longitudinal direction (20) of the wave guide (10).

7. High-power laser as defined in any of the preceding claims, characterized in that the resonator (50) is a confocal resonator.

8. High-power laser as defined in any of the preceding claims, characterized in that the resonator (50) has a beam path wherein the respective outer rays extend parallel to one another.

9. High-power laser as defined in claim 8, characterized in that the respective outer rays of the resonator (50) extend along the two outer side edges (28, 30) of the wave guide (10).

10. High-power laser as defined in any of claims 6 to 9, characterized in that the resonator axis (52) extends along one side edge (28) of the wave guide (10).

11. High-power laser as defined in any of claims 6 to 10, characterized in that the resonator (50) extends laterally of the resonator axis (52) as half of a resonator symmetrical to the resonator axis (52).

12. High-power laser as defined in any of the preceding claims, characterized in that the resonator mirrors (38, 44) have mirror surfaces (40, 46) extending at right angles to the wall surfaces (16, 18) of the wave guide (10) contiguous thereto.

13. High-power laser as defined in claim 12, characterized in that the resonator mirrors (38, 44) have cylindrical mirror surfaces (40, 46).

14. High-power laser as defined in any of the preceding claims, characterized in that the wave guide is a strip-type guide having plane wall surfaces (16, 18) extending transversely to the longitudinal direction.

15. High-power laser as defined in any of the preceding claims, characterized in that the wave guide (10) is curved in longitudinal direction.

16. High-power laser as defined in any of the preceding claims, characterized in that the wave guide (10) is angled in longitudinal direction (20).

17. High-power laser as defined in claim 16, characterized in that the wave guide (10) is angled several times in longitudinal direction (20).

18. High-power laser as defined in either of claims 16 or 17, characterized in that at least one deflecting element (102, 104) is provided between wave guide portions (10a, 10b) extending in a straight line in longitudinal direction.

19. High-power laser as defined in claim 17 or 18, characterized in that the wave guide portions (10a, 10b) are disposed parallel to one another.

20. High-power laser as defined in any of claims 17 to 19, characterized in that the wave guide portions (10a, 10b) are arranged one above the other.

21. High-power laser as defined in any of the preceding claims, characterized in that the resonator mirrors (38, 44) close the wave guide (10).

22. High-power laser as defined in claim 21, characterized in that the resonator mirrors (38, 44) rest on the wave guide (10) so as to overlap the wall surfaces (16, 18) and the wave guide (10) is shaped in accordance with the mirror surfaces (40, 46).

23. High-power laser as defined in any of the preceding claims, characterized in that the wall surfaces (16, 18) are made of metal.

24. High-power laser as defined in any of claims 1 to 22, characterized in that the wall surfaces (16, 18) are produced from a dielectric and bear plate-like electrodes (68, 70) on their outer side (64, 66).

25. High-power laser as defined in claim 24, characterized in that the electrodes (68, 70) are segmented by intermediate spaces (72, 74).

26. High-power laser as defined in claim 24 or 25, characterized in that the wall surfaces (16, 18) are provided with a conductive coating (84, 86).

27. High-power laser as defined in claim 26, characterized in that the conductive coating (84, 86) is applied in segments.

28. High-power laser as defined in any of the preceding claims, characterized in that the walls (12, 14) having the wall surfaces are penetrated by cooling channels (80, 82).

29. High-power laser as defined in any of the preceding claims, characterized in that a laser beam coupled out of the resonator (50) is expanded by a cylindrical optical means to form a bundle of rays symmetrical on all sides.

## Revendications (Revendications pour l'(les) Etat(s) contractant(s) suivant(s): DE, FR, GB, IT)

1. Laser de grande puissance excité électriquement et comprenant deux surfaces de paroi disposées à faible distance l'une de l'autre et formant un guide d'onde, dont la largeur est un multiple de leur écartement et comprenant un résonateur optique dont les miroirs sont disposés aux deux extrémités du guide d'onde, caractérisé en ce que les surfaces de paroi (16, 18) enveloppent entre elles une enceinte de décharge sans écoulement et refroidie par diffusion, dont la largeur est un multiple de l'écartement entre les surfaces de paroi (16, 18), en ce que le résonateur est un résonateur optique instable (50) avec un trajet suivi par les rayons s' étendant le long d'un axe (52) du résonateur et présentant une dimension transversale (54) par rapport à l'axe (52) du résonateur allant au moins jusqu'à un rayon laser sortant (55, 56), en ce que la dimension transversale (54) est transversale à une direction longitudinale (20) du guide d'onde (10) et approximativement parallèle aux surfaces de paroi (16, 18), et en ce que la dimension transversale (54) du trajet suivi par le rayon dans le résonateur (50) correspond au maximum à la largeur des surfaces de paroi (16, 18) du guide d'onde (10).

2. Laser de grande puissance excité électriquement comprenant deux surfaces de paroi disposées à faible distance l'une de l'autre et formant un guide d'onde, dont la largeur est un multiple de leur écartement et comprenant un résonateur optique dont les miroirs sont disposés aux deux extrémités du guide d'onde, caractérisé en ce que les surfaces de paroi (16, 18) enveloppent entre elles une enceinte de décharge sans écoulement et refroidie par diffusion, dont la largeur est un multiple de l'écartement entre les surfaces de paroi (16, 18), en ce que le résonateur est un résonateur optique instable (50) avec un trajet suivi par les rayons s'étendant le long d'un axe (52) du résonateur et présentant une dimension transversale (54) par rapport à l'axe (52) du résonateur allant au moins jusqu'à un rayon laser sortant (55, 56), en ce que la dimension transversale (54) est transversale à une direction longitudinale (20) du guide d'onde (10) et approximativement parallèle aux surfaces de paroi (16, 18), et en ce que le rayon laser produit par le résonateur (50) est agrandi par une optique cylindrique en un faisceau de rayons symétrique sur tous ses côtés.

3. Laser de grande puissance selon la revendication 1 ou 2, caractérisé en ce que le résonateur optique instable (50) comprend un miroir concave (38) qui recouvre complètement un premier côté large (36) du guide d'onde (10) à sa première extrémité (22).

4. Laser de grande puissance selon l'une quelconque des revendications 1 à 3, caractérisé en ce que le résonateur optique instable (50) comprend un miroir convexe (44) qui recouvre partiellement un second côté large (42) du guide d'onde (10) à sa seconde extrémité (24).

5. Laser de grande puissance selon la revendication 4, caractérisé en ce que le miroir convexe (44) du résonateur s'étend jusqu'à une paroi latérale (32) du guide d'onde (10).

6. Laser de grande puissance selon l'une quelconque des revendications précédentes, caractérisé en ce que l'axe (52) du résonateur est parallèle à la direction longitudinale (20) du guide d'onde (10).

7. Laser de grande puissance selon l'une quelconque des revendications précédentes, caractérisé en ce que le résonateur (50) est un résonateur à foyer commun.

8. Laser de grande puissance selon l'une quelconque des revendications précédentes, caractérisé en ce que le résonateur (50) comprend un trajet pour les rayons dans lequel les rayons respectivement externes sont parallèles entre eux.

9. Laser de grande puissance selon la revendication 8, caractérisé en ce que les rayons respectivement externes du résonateur (50) passent le long des deux bords latéraux externes (28, 30) du guide d'onde (10).

10. Laser de grande puissance selon l'une quelconque des revendications 6 à 9, caractérisé en ce que l'axe (52) du résonateur s'étend le long d'un bord latéral (28) du guide d'onde (10).

11. Laser de grande puissance selon l'une quelconque des revendications 6 à 10, caractérisé en ce que le résonateur (50) s'étend latéralement par rapport à l'axe (52) du résonateur en tant que moitié d'un résonateur symétrique par rapport à l'axe (52) du résonateur.

12. Laser de grande puissance selon l'une quelconque des revendications précédentes, caractérisé en ce que les miroirs (38, 44) du résonateur comprennent des surfaces (40, 46) qui sont perpendiculaires aux surfaces de paroi voisines (16, 18) du guide d'onde (10).

13. Laser de grande puissance selon la revendication 12, caractérisé en ce que les miroirs (38, 44) du résonateur comprennent des surfaces de miroir cylindriques (40, 46).

14. Laser de grande puissance selon l'une quelconque des revendications précédentes, caractérisé en ce que le guide d'onde est un guide d'onde en forme de bande avec des surfaces de paroi (16, 18) qui sont planes et transversales à la direction longitudinale.

15. Laser de grande puissance selon l'une quelconque des revendications précédentes, caractérisé en ce que le guide d'onde (10) est de forme courbe en direction longitudinale.

16. Laser de grande puissance selon l'une quelconque des revendications précédentes, caractérisé en ce que le guide d'onde (10) est coudé dans la direction longitudinale (20).

17. Laser de grande puissance selon la revendication 16, caractérisé en ce que le guide d'onde (10) est plusieurs fois coudé dans la direction longitudinale (20).

18. Laser de grande puissance selon l'une des revendications 16 ou 17, caractérisé en ce que, entre des éléments de guide d'onde (10a, 10b) de direction longitudinale en ligne droite, est prévu au moins un élément de renvoi (102, 104).

19. Laser de grande puissance selon la revendication 17 ou la revendication 18, caractérisé en ce que les éléments de guide d'onde (10a, 10b) sont disposés parallèles l'un à l'autre.

20. Laser de grande puissance selon l'une des revendications 17 à 19, caractérisé en ce que les éléments de guide d'onde (10a, 10b) sont disposés les uns au-dessus des autres.

21. Laser de grande puissance selon l'une des revendications précédentes, caractérisé en ce que les miroirs (38, 44) du résonateur ferment le guide d'onde (10).

22. Laser de grande puissance selon la revendication 21, caractérisé en ce que les miroirs (38, 44) du résonateur sont disposés sur le guide d'onde (10) en s'appliquant sur les surfaces de paroi (16, 18), et en ce que le guide d'onde (10) est formé de façon correspondante aux surfaces des miroirs (40, 46).

23. Laser de grande puissance selon l'une des revendications précédentes, caractérisé en ce que les surfaces de paroi (16, 18) sont en métal.

24. Laser de grande puissance selon l'une des revendications 1 à 22, caractérisé en ce que les surfaces de paroi (16, 18) sont réalisées en un matériau diélectrique et supportent des électrodes (68, 70) en forme de plaque sur leur côté externe (64, 66).

25. Laser de grande puissance selon la revendication 24, caractérisé en ce que les électrodes (68, 70) sont segmentées et séparées par des espaces intermédiaires (72, 74).

26. Laser de grande puissance selon la revendication 24 ou la revendication 25, caractérisé en ce que les surfaces de paroi (16, 18) sont munies d'une couche conductrice (84, 86).

27. Laser de grande puissance selon la revendication 26, caractérisé en ce que la couche conductrice (84, 86) est appliquée sous forme de segments.

28. Laser de grande puissance selon l'une des revendications précédentes, caractérisé en ce que les parois (12, 14) comprenant les surfaces de paroi sont traversées par des canalisations de refroidissement (80, 82).

29. Laser de grande puissance selon l'une des revendications 1 et 3 à 28, caractérisé en ce que le rayon laser produit par le résonateur (50) est agrandi par une optique cylindrique en un faisceau de rayons symétrique sur tous ces côtés.

## Revendications (Revendications pour l'(les) Etat(s) contractant(s) suivant(s): ES)

1. Laser de grande puissance excité électriquement et comprenant deux surfaces de paroi disposées à faible distance l'une de l'autre et formant un guide d'onde, dont la largeur est un multiple de leur écartement et comprenant un résonateur optique dont les miroirs sont disposés aux deux extrémités du guide d'onde, caractérisé en ce que les surfaces de paroi (16, 18) enveloppent entre elles une enceinte de décharge sans écoulement et refroidie par diffusion, dont la largeur est un multiple de l'écartement entre les surfaces de paroi (16, 18), en ce que le résonateur est un résonateur optique instable (50) avec un trajet suivi par les rayons s'étendant le long d'un axe (52) du résonateur et présentant une dimension transversale (54) par rapport à l'axe (52) du résonateur allant au moins jusqu'à un rayon laser sortant (55, 56), et en ce que la dimension transversale (54) est transversale à une direction longitudinale (20) du guide d'onde (10) et approximativement parallèle aux surfaces de paroi (16, 18).

2. Laser de grande puissance selon la revendication 1, caractérisé en ce que la dimension transversale (54) du trajet suivi par le rayon dans le résonateur (50) correspond au maximum à la largeur des surfaces de paroi (16, 18) du guide d'onde (10).

3. Laser de grande puissance selon la revendication 1 ou 2, caractérisé en ce que le résonateur optique instable (50) comprend un miroir concave (38) qui recouvre complètement un premier côté large (36) du guide d'onde (10) à sa première extrémité (22).

4. Laser de grande puissance selon l'une quelconque des revendications 1 à 3, caractérisé en ce que le résonateur optique instable (50) comprend un miroir convexe (44) qui recouvre partiellement un second côté large (42) du guide d'onde (10) à sa seconde extrémité (24).

5. Laser de grande puissance selon la revendication 4, caractérisé en ce que le miroir convexe (44) du résonateur s'étend jusqu'à une paroi latérale (32) du guide d'onde (10).

6. Laser de grande puissance selon l'une quelconque des revendications précédentes, caractérisé en ce que l'axe (52) du résonateur est parallèle à la direction longitudinale (20) du guide d'onde (10).

7. Laser de grande puissance selon l'une quelconque des revendications précédentes, caractérisé en ce que le résonateur (50) est un résonateur à foyer commun.

8. Laser de grande puissance selon l'une quelconque des revendications précédentes, caractérisé en ce que le résonateur (50) comprend un trajet pour les rayons dans lequel les rayons respectivement externes sont parallèles entre eux.

9. Laser de grande puissance selon la revendication 8, caractérisé en ce que les rayons respectivement externes du résonateur (50) passent le long des deux bords latéraux externes (28, 30) du guide d'onde (10).

10. Laser de grande puissance selon l'une quelconque des revendications 6 à 9, caractérisé en ce que l'axe (52) du résonateur s'étend le long d'un bord latéral (28) du guide d'onde (10).

11. Laser de grande puissance selon l'une quelconque des revendications 6 à 10, caractérisé en ce que le résonateur (50) s'étend latéralement par rapport à l'axe (52) du résonateur en tant que moitié d'un résonateur symétrique par rapport à l'axe (52) du résonateur.

12. Laser de grande puissance selon l'une quelconque des revendications précédentes, caractérisé en ce que les miroirs (38, 44) du résonateur comprennent des surfaces (40, 46) qui sont perpendiculaires aux surfaces de paroi voisines (16, 18) du guide d'onde (10).

13. Laser de grande puissance selon la revendication 12, caractérisé en ce que les miroirs (38, 44) du résonateur comprennent des surfaces de miroir cylindriques (40, 46).

14. Laser de grande puissance selon l'une quelconque des revendications précédentes, caractérisé en ce que le guide d'onde est un guide d'onde en forme de bande avec des surfaces de paroi (16, 18) qui sont planes et transversales à la direction longitudinale.

15. Laser de grande puissance selon l'une quelconque des revendications précédentes, caractérisé en ce que le guide d'onde (10) est de forme courbe en direction longitudinale.

16. Laser de grande puissance selon l'une quelconque des revendications précédentes, caractérisé en ce que le guide d'onde (10) est coudé dans la direction longitudinale (20).

17. Laser de grande puissance selon la revendication 16, caractérisé en ce que le guide d'onde (10) est plusieurs fois coudé dans la direction longitudinale (20).

18. Laser de grande puissance selon l'une des revendications 16 ou 17, caractérisé en ce que, entre des éléments de guide d'onde (10a, 10b) de direction longitudinale en ligne droite, est prévu au moins un élément de renvoi (102, 104).

19. Laser de grande puissance selon la revendication 17 ou la revendication 18, caractérisé en ce que les éléments de guide d'onde (10a, 10b) sont disposés parallèles l'un à l'autre.

20. Laser de grande puissance selon l'une des revendications 17 à 19, caractérisé en ce que les éléments de guide d'onde (10a, 10b) sont disposés les uns au-dessus des autres.

21. Laser de grande puissance selon l'une des revendications précédentes, caractérisé en ce que les miroirs (38, 44) du résonateur ferment le guide d'onde (10).

22. Laser de grande puissance selon la revendication 21, caractérisé en ce que les miroirs (38, 44) du résonateur sont disposés sur le guide d'onde (10) en s'appliquant sur les surfaces de paroi (16, 18), et en ce que le guide d'onde (10) est formé de façon correspondante aux surfaces des miroirs (40, 46).

23. Laser de grande puissance selon l'une des revendications précédentes, caractérisé en ce que les surfaces de paroi (16, 18) sont en métal.

24. Laser de grande puissance selon l'une des revendications 1 à 22, caractérisé en ce que les surfaces de paroi (16, 18) sont réalisées en un matériau diélectrique et supportent des électrodes (68, 70) en forme de plaque sur leur côté externe (64, 66).

25. Laser de grande puissance selon la revendication 24, caractérisé en ce que les électrodes (68, 70) sont segmentées et séparées par des espaces intermédiaires (72, 74).

26. Laser de grande puissance selon la revendication 24 ou la revendication 25, caractérisé en ce que les surfaces de paroi (16, 18) sont munies d'une couche conductrice (84, 86).

27. Laser de grande puissance selon la revendication 26, caractérisé en ce que la couche conductrice (84, 86) est appliquée sous forme de segments.

28. Laser de grande puissance selon l'une des revendications précédentes, caractérisé en ce que les parois (12, 14) comprenant les surfaces de paroi sont traversées par des canalisations de refroidissement (80, 82).

29. Laser de grande puissance selon l'une des revendications précédentes, caractérisé en ce que le rayon laser produit par le résonateur (50) est agrandi par une optique cylindrique en un faisceau de rayons symétrique sur tous ces côtés.
